(19) Europäisches Patentamt
European Patent Office
Office européen des brevets

(11) Publication number: **0 013 115**
**B1**

(12) **EUROPEAN PATENT SPECIFICATION**

(45) Date of publication of patent specification: **21.07.82**

(21) Application number: **79302934.9**

(22) Date of filing: **18.12.79**

(51) Int. Cl.³: **A 01 N 43/64** //(A01N43/64, 43/40)

(54) **Herbicidal synergetic composition containing a pyridine N-oxide and a triazinone and a method for controlling weeds therewith.**

(30) Priority: **22.12.78 US 972584**

(43) Date of publication of application:
**09.07.80 Bulletin 80/14**

(45) Publication of the grant of the patent:
**21.07.82 Bulletin 82/29**

(84) Designated Contracting States:
**BE DE FR IT LU NL**

(56) References cited:
**US - A - 3 671 523**
**US - A - 3 960 542**

(73) Proprietor: **UNIROYAL, INC.**
**1230 Avenue of the Americas Rockefeller Center**
**New York, New York 10020 (US)**

(72) Inventor: **Bell, Allyn Roy**
**686 Wiese Road Cheshire**
**New Haven Connecticut (US)**

(74) Representative: **Harrison, Michael Robert et al,**
**URQUHART-DYKES & LORD 11th Floor Tower**
**House Merrion Way**
**Leeds LS2 8PB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 013 115 B1**

Synergistic herbicidal composition

Certain sulfinyl and sulfonyl pyridine N-oxides are taught as being effective herbicides. See, for example, U.S. Patent Nos. 3,960,542, 4,019,893 and 4,050,921 incorporated herein by reference. Similarly, certain triazinones in particular, 4-amino-6-(1,1 dimethylethyl)-3-methyl thio)-1,2,4-triazin-5(4H) one are useful as herbicides. See, for example, U.S. Patent 3,905,801 incorporated herein by reference.

The triazonone is particularly effective in control of weeds in soybeans and potatoes. However, this herbicide does not control grass as well and is also relatively ineffective against broadleaf plants such as jimsonweed and morningglory.

It has surprisingly been found that 2-(1-(2,5, dimethylphenyl)ethylsulfonyl) pyridine N-oxide, when used in the combination with 4-amino-6-(1,1-dimethylethyl)-3-methyl thio-1,2,4-triazin-5(4H)-one, is effective against certain grasses and broadleaf weeds notwithstanding the fact that, when used independently neither compound shows this activity. The ratio of pyridine N-oxide to triazinone for effective results is from 0.5 to 1 to 8 to 1.

This invention relates to herbicidal compositions. In particular, it relates to a combination of 2-(1-(2,5,dimethylphenyl)ethylsulfonyl) pyridene N-oxide, with a triazinone.

The pyridene N-oxide useful in the practice of this invention has the general formula:

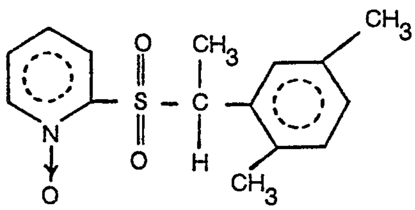

(I)

The use and preparation of this compound is taught in U.S. Patent 3,960,542 incorporated herein by reference.

The triazinone suitable for use in the practice is 4-amino-6-tertiary butyl-3-(methylthio)1,2,3-triazin-5(4H)one having the general formula:

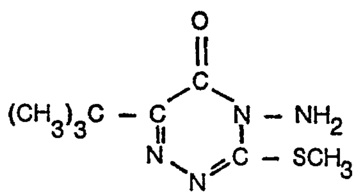

(II)

The preparation and use of this triazinone is taught in U.S. Patent 3,905,801 incorporated herein by reference. As used in the synergistic combination of this invention, the ratio of pyridine compound (hereinafter referred to as Compound (I)) to triazinone compound (hereinafter referred to as Compound (II)) can be from 0.5 to 1 to 8 to 1 preferably from 1 to 1 to 4 to 1, e.g. 2 to 1.

Although the invention is described in terms of the activity of the N-oxide/triazinone combination in controlling jimsonweed and morningglory, the combination exhibits particularly broad and selective herbicidal activity in dicotyledonous crop cultures such as soybeans or potatoes.

Illustrative examples of the weeds which may be controlled include monocots such as fox tail species (*Setaria*), panicum species (*Panicum*), crabgrass species (*Digitaria*), barnyard grass (*Echinochloa crus-galli* L. Beauv.), goosegrass (*Eleusine indica* (L.) Gaerten), red rice (*Oryza sativa* L), johnsongrass (*Sorghum halepense* (L.) Pers.), wild oats (*Avena fatua* L.) and dicots such as pigweed species (*Amaranthus*), morningglory species (*Ipomea*), jimsonweed (*Datura stramonium* L.), common lambs quarters (*Chenopodium album* L.), prickly sida (*Sida* spinosa L), coffeeweed (*Daubentonia texana* Pierce), sickle pod (*Cassia obtusifolia* L.), velvetleaf (*Abutilon theophrasti* Medic), mustard species (*Brassica*), Pennsylvania smartweed (*Polygonum pensylvanicum* L.) and common ragweed (*Ambrosia artemisiifolia* L.).

When used in its usual prior art application, the pyridine N-oxide (I) is applied at 0,56—3,36 kg/ha (one-half to about three pounds per acre) more preferably 0,56—1,12 kg/ha (one-half to one pound per acre). The triasinone (II) is generally applied at 0,28—0,84 kg/ha (one quarter to three quarters of a pound per acre). Surprisingly, although compound (I) is the predominant component of the combination of this invention, the combination is effective when used at 0,28—0,84 kg/ha (one quarter to three quarters of a pound per acre). The combination of this invention exhibits excellent activity

against dicotyledonous and monocolytedonous weeds without harming the crop and therefore can be used for selective weed control.

The method of using the herbicidal combinations of this invention follows conventional practice and the chemicals are suitably applied as formulations in accordance with conventional agriculatural practice. Thus, the composition may be impregnated on finely divided or granular inorganic or organic carriers such as attapulgite clay, sand, vermiculite, corn cobs, activated carbon or other granular carriers known to the art. The impregnated granules may then be spread on the soil.

Similarly, the compositions may be formulated as a wettable powder by grinding it into a fine powder and mixing it with inactive powdered carriers (as described above) to which a surface active dispersing agent has been added. Typical powdered solid carriers are the various mineral silicates, e.g. mica, talc, pyrophyllite and clays. The wettable powder may then be dispersed in water and sprayed on the soil surface or weeds. Similarly, an emulsifiable concentrate may be prepared by dissolving the chemical in a solvent such as benzene, toluene or other aliphatic or aromatic hydrocarbon to which a surface active dispersing agent has been added. The emulsifiable concentrate may then be dispersed in water and applied by spraying. Suitable surface active agents are well known to those skilled in the art and reference may be had to McCutcheon's Detergents and Emulsifiers, 1970, Allured Publishing Corp., Ridgewood, New Jersey; or Hoffman et al U.S. patents 2,614,916, Cols. 2 to 4 and 2,547,724, Cols. 3 and 4, for examples of appropriate surface active agents. The concentration of active chemical in the formulation may vary widely, e.g. from 1 to 95%. The concentration of active chemical in dispersions applied to the soil or foliage is almost invariably from 0.002% to 75%. For use as a preemergence herbicide, the chemical is applied to soil which contains weed and crop seed (either to the surface of the soil or incorporated into the upper one to three inches of soil). The composition may be employed individually or as a mixture of two or more known herbicidal chemicals.

The synergistic activity of a combination can only be determined imperically since it is an unexpected result. The result to be expected from a given combination of two herbicides can be calculated as taught by Colby; see Colby, S.R. "Calculating Synergistic and Antagonistic Respones of Herbicide Combinations" *Weeds, 15,* 20—22 (1967) incorporated herein by reference. For clarity, the method is described briefly below:

If X = % damage by herbicide A when using p Kg/ha and Y = % damage by herbicide B when using q kg/ha then E, the expected damage of herbicides A and B when using p and q Kg/ha is expressed by the equation

$$E = X + Y - (^{XY}/100)$$

If the experimentally determined value of E exceeds the calculated value, the action of the combination is synergistic. As is shown in the following examples, the result obtained with the combination of this invention is indeed a synergistic one.

Example I

To illustrate the effectiveness of the described composition, 50% wettable powder formulations of compounds I and II were suspended in water at the rate of .01 g formulation per 200 ml water. Aliquots of various size from suspensions I and II were combined and brought up to 80 ml. For example 10 ml suspension (I) was combined with 10 ml of suspension II and then brought up to 80 ml of a ratio of 0.14 kg/ha (1/8 lb/A) (I) to 0.14 kg/ha (1/8 1b/A) II. For (0.14 kg/ha (1/8 lb/A) (I) to 0,28 kg/ha (1/4 lb/A) (II), 10 ml (I) were added to 20 ml (II) and then brought up 80 ml.

Preemergence greenhouse soil contained in 6 inch diameter pots was sown with seeds of jimsonweed and was drenched with 80 ml of the desired suspension. The percent control of weeds compared to untreated checks was determined four weeks after treatment. Table I shows the synergistic effect of the composition prepared in accordance with the above example.

TABLE I

| Active compound or combination of active compounds | Application Rate kg/ha | lb/A | Percent Jimsonweed Control Observed | Calculated |
|---|---|---|---|---|
| (I) known | 0,14 | 1/8 | 0 | — |
| | 0,28 | 1/4 | 0 | — |
| | 0,56 | 1/2 | 0 | — |
| (II) known | | | | |
| | 0,14 | 1/8 | 0 | — |
| | 0,28 | 1/4 | 30 | — |
| (I) + (II) According to the | 0,14 + 0,14 | 1/8 + 1/8 | 70 | 0 |
| | 0,14 + 0,28 | 1/8 + 1/4 | 70 | 30 |
| | 0,28 + 0,14 | 1/4 + 1/8 | 70 | 0 |
| | 0,28 + 0,28 | 1/4 + 1/4 | 60 | 30 |
| | 0,56 + 0,14 | 1/2 + 1/8 | 70 | 0 |
| | 0,56 + 0,28 | 1/2 + 1/4 | 85 | 30 |

Example II

The combinations of this invention was tested for effectiveness on tall morningglory (Ipomea purpurea L. Roth) in the manner of Example I. The results are shown in Table II.

TABLE II

| Active compound or combination of active compounds | Application Rate kg/ha | lb/A | Percent Tall Morningglory Control Observed | Calculated |
|---|---|---|---|---|
| (I) known | 0,28 | 1/4 | 0 | — |
| | 0,56 | 1/2 | 0 | — |
| (II) known | 0,07 | 1/16 | 20 | — |
| | 0,14 | 1/8 | 20 | — |
| (I) + (II) | 0,28 + 0,07 | 1/4 + 1/16 | 100 | 20 |
| According to the invention | 0,56 + 0,07 | 1/2 + 1/16 | 90 | 20 |
| | 0,28 + 0,37 | 1/4 + 1/3 | 95 | 20 |
| | 0,56 + 0,14 | 1/2 + 1/8 | 100 | 20 |

As is readily apparent from the above examples, the combinations of this invention show synergistic activity with respect to jimsonweed and morningglory. Similar tests on redroot pigweed, wild oats, green fox tail and barnyard grass showed that the combination was also effective in controlling these weeds.

Although the herbicidal combination of this invention is preferably applied at a rate of 0,28—0,84 kg/ha (1/4 to 3/4 lb/acre) the application rate may vary according to soil type, soil pH etc. At least 0,28 kg/ha (1/4 lb/acre) must be used, although as much as 28 kg/ha (25 pounds per acre) may be used. Methods of adjusting application rate to conditions are within the knowledge of those skilled in the art.

## Claims

1. A herbicidal composition characterised in that it comprises a pyridine N-oxide of the formula:

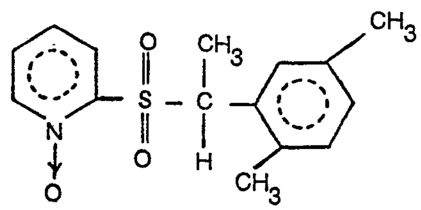

(I)

and a triazinone of the formula:

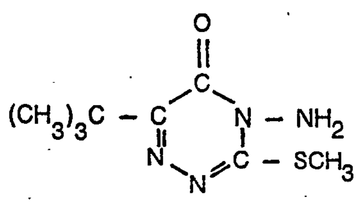

(II)

wherein the ratio of (I) to (II) is from 0.5 to 1 to 8 to 1.

2. A composition according to claim 1 characterised in that the ratio of (I) to (II) is from 1 to 1 to 4 to 1.

3. A composition according to claim 1 or claim 2 characterised in that the compounds are suspended in a vehicle.

4. A composition according to claim 3 characterised in that the vehicle is water.

5. A method for controlling weeds characterised in that the method comprises treating soil with a herbicidally effective amount of a herbicidal composition according to any of the preceding claims.

6. A method according to claim 5 characterised in that the weeds include jimsonweed and morningglory.

## Revendications

1. Composition herbicide, caractérisée en ce qu'elle contient un N-oxyde de pyridine de formule:

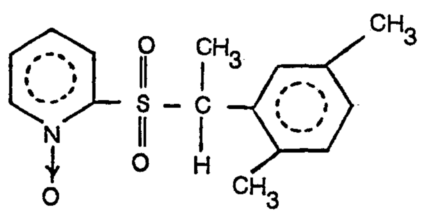

(I)

et une triazinone de formule:

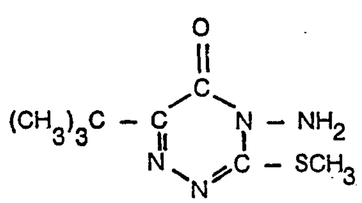

(II)

où le rapport de (I) à (II) est compris entre 0,5 à 1 et 8 à 1.

2. Composition selon la revendication 1, caractérisée en ce que le rapport de (I) à (II) est compris entre 1 à 1 et 4 à 1.

3. Composition selon la revendication 1 ou la revendication 2, caractérisée en ce que les composés sont mis en suspension dans un véhicule.

4. Composition selon la revendication 3, caractérisée en ce que le véhicule est de l'eau.

5. Procédé pour contrôler les mauvaises herbes, caractérisée en ce qu'il consiste à traiter le sol avec une quantité herbicidement efficace d'une composition herbicide selon l'une quelconque des revendications précédentes.

6. Procédé selon la revendication 5, caractérisé en ce que les mauvaises herbes comprennent l'herbe à la taupe et le volubilis.

**Patentansprüche**

1. Unkrautvertilgungsmittel, dadurch gekennzeichnet, daß es ein Pyridin-N-oxid der Formel:

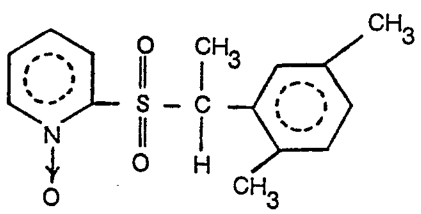

(I)

und ein Triazinon der Formel:

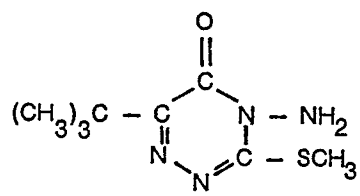

(II)

enthält wobei das Verhältnis von (I) zu (II) 0,5:1 bis 8:1 beträgt.

2. Mittel nach Anspruch 1, dadurch gekennzeichnet, daß das Verhältnis von (I) zu (II) 1:1 bis 4:1 beträgt.

3. Mittel nach Anspruch 1 oder Anspruch 2, dadurch gekennzeichnet, daß die Verbindungen in einer Trägerflüssigkeit bzw. Trägersubstanz suspendiert sind.

4. Mittel nach Anspruch 3, dadurch gekennzeichnet, daß die Trägerflüssigkeit Wasser ist.

5. Verfahren zur Einschränkung bzw. Bekämpfung von Unkräutern, dadurch gekennzeichnet, daß Erdboden mit einer herbizid wirksamen Menge eines Unkrautvertilgungsmittels nach einem der vorhergehenden Ansprüche behandelt wird.

6. Verfahren nach Anspruch 5, dadurch gekennzeichnet, daß in die Unkräuter der Gewöhnliche Stechapfel (Datura stramonium) und Arten der Gattung Trichterwinde (Ipomoea) eingeschlossen sind.